# EUROPEAN PATENT APPLICATION

(11) **EP 2 530 864 A1**
(43) Date of publication of application: **05.12.2012**
(21) Application number: 11168687.9
(22) Date of filing: 03.06.2011
(51) Int. Cl.: H04L 1/20, H04B 17/00, H04W 52/02

(54) **Apparatus and Method for Power Saving**

(71) Applicant: Telefonaktiebolaget LM Ericsson (publ), 164 83 Stockholm (SE)
(72) Inventor: Olsson, Thomas, SE-37437 Karlshamn (SE); Carlsson, Anders, SE-22240 Lund (SE); Mattisson, Sven, SE-237 36 Bjärred (SE); Sundström, Lars, SE-224 74 Lund (SE)
(74) Representative: Rees, Simon John Lewis

(57) **Abstract**

The present invention takes advantage of a phase correlation process at a receiver, for example the plurality of different clock phases that are provided for ascertaining the most favourable phase for burst reception in a digital signalling link, and uses this phase correlation information for a different purpose. For example, the plurality of different clock phases are used to provide an indication of the quality of the received signal. The quality of the received signal can then be used to adapt one or more parameters in the digital signalling link, to save power when desired.

## Description

### Technical Field

The invention relates to an apparatus and method for power saving, and in particular to an apparatus and method for power saving in a digital signalling system, for example a differential digital signalling system.

### Background

Differential digital signalling is a technique that is often used for chip-to-chip communication, which involves the transmission of information serially between first and second chips, for example by means of two complementary signals sent on two separate wires. An example of one standard for specifying differential digital signalling is that which is being developed by the DigRF Working Group, which is part of the Mobile Industry Processor Interface Alliance (MIPI). The DigRF standard is focused on developing differential digital signalling specifications for mobile devices in a telecommunications network, and in particular differential digital signalling between radio frequency (RF) chips and baseband (BB) chips of such mobile devices. DigRF is intended for use in high bandwidth mobile systems incorporating air interface standards such as Long Term Evolution (LTE) and WiMAX.

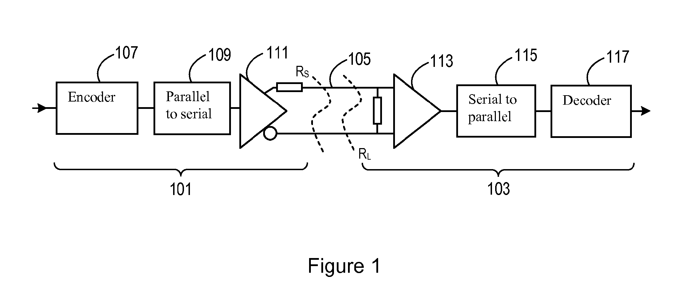

Figure 1 shows the basic components in a differential digital signalling link 100, comprising a transmitter side 101 and a receiver side 103, coupled by a communication link, for example a wire 105. The transmitter side 101 typically comprises an encoder 107 which encodes a signal that is to be transmitted. The encoded signal is converted from parallel data to serial data using a parallel-to-serial converter 109. A transmitting unit 111 (for example comprising an amplifier circuit) has an input coupled to receive the output of the parallel-to-serial converter 109, and an output coupled to the communication link 105.

The receiving stage 103 comprises a receiving unit 113 (for example comprising an amplifier circuit) coupled to receive data from the communication link 105. A serial-to-parallel converted 115 is coupled to receive the output of the receiving unit 113. A decoder 117 decodes the parallel data received from the serial-to-parallel converter 115.

For such high speed communication links the wire 105 connecting the transmitter side 101 to the receiver side 103 can be modelled as a transmission line. The transmission line should be properly terminated at the transmitter side and the receiver side, and in particular with a source impedance R_{S} and a load impedance R_{L} that match the characteristic impedance of the transmission line to avoid reflections. Otherwise, if sufficiently large, such reflections will lead to errors in the decoded signal.

A problem with existing solutions is the power consumption of differential digital signalling systems.

### Summary

It is an aim of embodiments of the present invention to provide an apparatus and method for saving power, and in particular for saving power in a digital signalling system, for example in a differential digital signalling system such as a DigRF system.

According to a first aspect of the invention, there is provided a method of saving power in a digital signalling link. The method comprises the steps of partitioning a received signal into a plurality of different clock phases for phase correlation. The quality of the received signal is determined based on a result of the phase correlation. One or more parameters that affect power consumption in the digital signalling link are adapted according to the determined quality of the received signal.

According to one embodiment, the quality of the received signal may be determined by monitoring how many of the different clock phases result in correct reception.

According to another aspect of the invention, there is provided an apparatus for saving power in a digital signalling link. The apparatus comprises a partitioning unit coupled to receive a signal from the digital signalling link, and adapted to partition the received signal into a plurality of different clock phases for phase correlation. A monitoring unit is adapted to determine the quality of the received signal based on a result of the phase correlation. A control unit adapts one or more parameters that affect power consumption in the digital signalling link, according to the determined quality of the received signal.

According to one embodiment, the monitoring unit is adapted to determine the quality of the received signal by monitoring how many of the different clock phases result in correct reception.

According to another aspect of the invention, there is provided a transmitter apparatus for use in a digital signalling link. The transmitter apparatus comprises receiving means coupled to receive a signal quality indicator from a remote receiver apparatus, wherein the signal quality indicator indicates the quality of a signal received at the remote receiver apparatus based on a result of a phase correlation operation performed at the remote receiver. A control unit adjusts one or more parameters in the transmitter apparatus, based on the signal quality indicator, that effect the power consumption of the digital signalling link.

According to one embodiment, the signal quality indicator is based on how many different clock phases used for signal correlation at the remote receiver resulted in correct reception of a signal received at the remote receiver.

### Brief description of the drawings

For a better understanding of the present invention, and to show more clearly how it may be carried into effect, reference will now be made, by way of example only, to the following drawings in which:
Figure 1 shows the basic components in a typical differential digital signalling system;
Figure 2 shows method steps according to an embodiment of the invention;
Figure 3 shows an "eye diagram" illustrating phase correlation;
Figure 4 shows an example of an embodiment for providing a source impedance;
Figure 5 shows an apparatus according to an embodiment of the invention;
Figure 6 shows method steps according to another embodiment; and
Figure 7 shows a transmitter apparatus according to an embodiment of the invention.

### Detailed description

The embodiments below will be described in relation to differential digital signalling in the context of the DigRF specification, and in relation to mobile devices for use in telecommunication systems. It is noted, however, that the invention may be used with any form of digital signalling system, and with applications other than telecommunication applications, including non-wireless applications. Examples of other applications where the invention can be used include any communication system performing local clock recovery and having transmitter power control, for example low-voltage differential, short-distance optical and radio communication systems.

The invention is concerned with saving power by adapting the signal quality for the digital differential transceiver link based on observations of received signal quality. According to one embodiment the quality of the received signal is determined based on a phase correlation process, for example by monitoring different clock phases that are used for phase correlation, and determining the quality of the received signal by monitoring how many, or what range, of the different clock phases provide correct reception, as will be explained in greater detail below.

The DigRF standard specifies the use of one or several differential links accompanied by a reference clock with unknown phase. As such, data transmission between a first device (for example a baseband chip) and a second device (for example a RF chip) is plesiochronous in nature, i.e. whereby the frequency is correct (by a multiple) but the phase is unknown. Consequently, a receiver stage does not have knowledge about the correct clock phase to be used for extracting the data. Therefore, a known phase synchronisation pattern is transmitted, for example close to the start of a frame, to enable synchronisation to be established. A receiver clock is generated from the reference clock by clock multiplication in a frequency synthesizer.

Phase alignment of the digital signal is performed by cross correlating the known synchronisation pattern in the received bit stream to determine the best clock phase for reception, i.e. the best clock phase for the extraction of data.

For the phase alignment the phase of the clock output from the frequency synthesizer is adjusted. Various methods can be used to achieve the phase adjustment, for example the use of delay elements, having a number of clock phases as output from the clock synthesizer, or generating a higher clock frequency and then extracting the desired frequency with different phases.

Regardless of the method used to generate different phases the result is an ability to set phase shift and then perform the correlation preferably on several phases simultaneously.

Embodiments of the present invention take advantage of a solution in which a plurality of different clock phases are made available, preferably in parallel so that the plurality of different clock phases are assessed in parallel. It is noted, however, that the invention also encompasses the possibility of a plurality of different clock phases being assessed serially, for example in an application having a comparatively low baud rate in the communication link.

During operation of a receiver the phase correlation can be performed using all or several of the plurality of available phases to find the best phase position to receive a burst of data. The result will be that correct correlation may be found for several adjacent phase positions and the most favourable phase can be selected for the burst reception.

The present invention takes advantage of the plurality of different clock phases that are provided for ascertaining the most favourable phase for burst reception, and uses these plurality of different clock phases for a different purpose. The plurality of different clock phases are used to provide an indication of the quality of the received signal. The determined quality of the received signal can then be used to adapt one or more parameters that affect power consumption in the differential digital signalling link, to save power when desired.

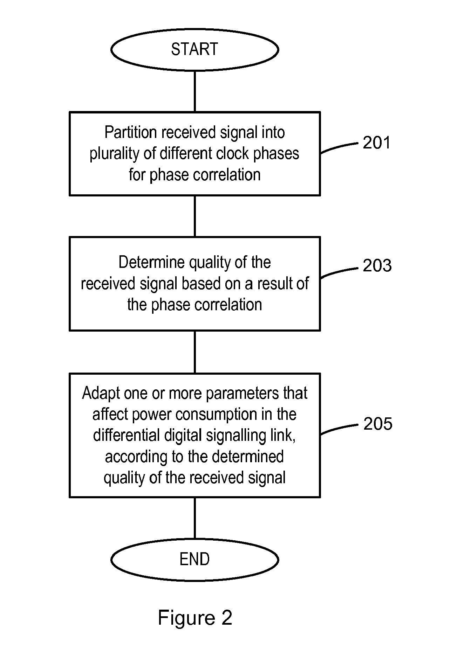

Figure 2 shows the steps performed by an embodiment of the present invention. In step 201, the received signal is partitioned into a plurality of different clock phases for phase correlation. As mentioned above, this partitioning may already be provided for another reason, such as determining the most favourable clock phase for reception. It is noted however, that the invention does not exclude the possibility of partitioning the received signal into a plurality of different clock phases solely for the purpose of the invention. It will be appreciated that the clock has different phases, with the signal then being sampled using the differently delayed clock signals. In step 203, the quality of the received signal is determined based on a result of the phase correlation. For example, the quality of the received signal may be determined by monitoring or sensing how many of the different clock phases provide correct reception.

According to one embodiment the quality of the received signal may be determined according to whether the number of clock phases that result in correct reception is above a certain threshold. Alternatively, a range of clock phases that lead to a correct correlation may be used as an indication of the received signal quality. It is also noted that other examples are intended to be embraced by the invention. One or more parameters associated with the differential digital signalling link are then adapted, step 205, according to the determined quality of the received signal. This involves adapting one or more parameters that affect the power consumption of the differential digital signalling link.

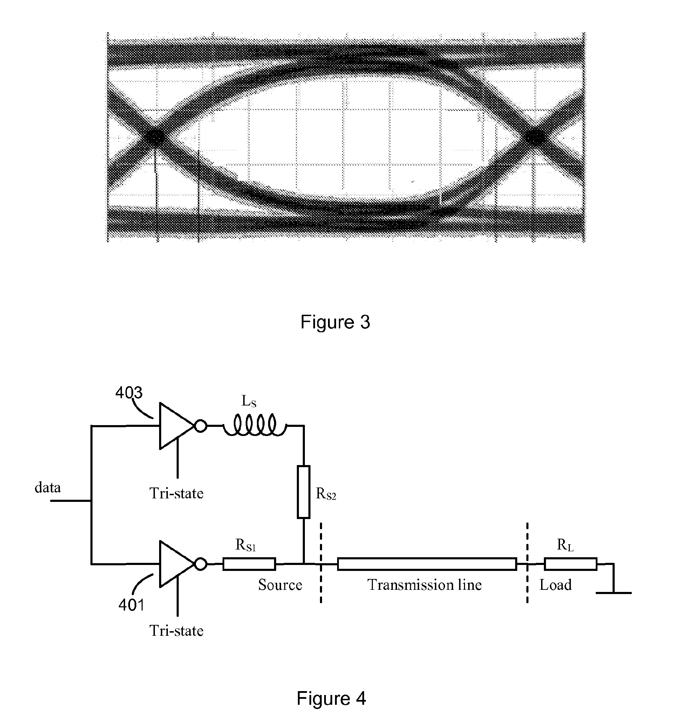

As mentioned above, the number, or range, of phases resulting in correct correlation may be used to give a strong indication of the signal quality. This is illustrated as the "eye opening" in Figure 3. According to one embodiment, determining the number or range of "correct correlations" may involve data detected with one of the clock phases (which may be termed "the centre phase") being deemed a correctly detected correlation, with the result of the detection with the other clock phases then either being equal (i.e. correct correlation or reception) or not (i.e. incorrect correlation or reception) to the detection with the centre clock phase. It is noted, however, that other methods may be used for determining a correct correlation.

It is noted that a "correct correlation" may be a simple pass or fail situation. Alternatively, "correct correlations" may comprise correlations which vary gradually from an "ideal" correlation, but which are still above a given threshold level.

According to one embodiment, the correct/incorrect results can be accumulated, i.e. counted for each clock phase. After receiving N data symbols, for example where N = 100, the number of incorrect detections can be between 0 and 100 for any of the phases besides the centre phase. Thus, when looking at all the phases there will be a gradient where the edge phases should count at least M errors, for example where M = 50 errors. This illustrates one example of how the number of correctly received correlations may be used to determine the signal quality. It is noted that other methods of determining the number of correctly received correlations, and other thresholds, may also be used.

The eye diagram of Figure 3 illustrates the end of the transmission channel before the signal reaches the receiver. In an eye diagram, the degree of eye opening indicates how a signal has been affected by timing deviations from the ideal timing, also known as jitter. The result of the error accumulation described in the example above would constitute a form of unipolar eye diagram. The shape of the detected "eye opening" may be transformed to provide to transmitter/receiver parameters for affecting the power consumption. According to one embodiment this may be accomplished using specific training data and/or performed with live data.

For DigRF communication there is a coding scheme where 8 bits are encoded in 10 bit format. Used alone the error detection from the 8/10 bits coding may not be adequate for providing an indication of the channel quality. However, according to one embodiment, the results from the decoder can be used in conjunction with the number of correctly received phases to make a decision on trading signal quality, and the one or more parameters of the differential digital signalling link adapted accordingly to change power consumption.

Several methods can be used either individually, or in combination, to adapt parameters that affect the power consumption of the differential digital signalling link, including in the transmitter circuit and/or receiver circuit of the differential digital signalling link. The following methods are given as examples on how power may be saved while reducing the received signal quality.

According to one embodiment a load impedance R_{L} on the receiver side may be increased (i.e. such that it is mismatched with the impedance of the transmission link). This has the effect of reducing signal current, and hence reducing power consumption. This will result in increased reflections at the interface between the transmission line and the receiver input and possibly less number of phases being received correctly. In such an embodiment the receiver has the ability to measure the fidelity of the received signal and based on this control the load impedance.

For example, assume that the nominal load impedance is 1000hm and source impedance is also 1000hm, which gives 2mA signal current if the output differential mode voltage is 400mV. If it is found that the load impedance can be increased to 1kOhm and still have acceptable received signal, then the signal current is instead 0.33mA. The actual saving in this example depends on the line driver implementation, but it can be as high as 1.66mA times the supply voltage for each line driver. It will be appreciated that these values are examples only, and that other load impedances may be used.

According to another embodiment, a similar method to that described above is used, but whereby the source impedance Rₛ of the transmitter side is increased to 1 KOhm (such that it is mismatched with the impedance of the transmission link). According to such an embodiment the receiver is adapted to convey to the transmitter the quality of the received signal, such that the transmitter side can determine what changes should be made to the source impedance. It will be appreciated that when each side of the communication link comprises a transceiver, the "receiver side" can receive such an indication from another receiver on the "transmitter side" of the communication link, such that the transceiver on the "receiver side" can adapt its own source impedance.

According to one embodiment, a controller at the receiver side is provided for determining the quality information and what source impedance R_{S} should be used at the transmitter side, such information then being conveyed to the transmitter side. Alternatively, a controller at the receiver side can be adapted to determine the quality information, which is conveyed to the transmitter side, and another controller at the transmitter side adapted to determine the source impedance Rₛ. According to yet another embodiment, both the quality information and source impedance R_{S} can be determined using a controller provided on the transmitter side, for example based on raw data about correct correlations being sent form the receiver to the transmitter side. It is noted that this arrangement of which steps are performed at the receiver and transmitter side, respectively, can be split or combined in any combination, and for each of the embodiments described herein.

It is noted that the invention is intended to encompass information being conveyed between the receiver and transmitter side in any one of a number of ways. For example, a certain data packet, or portion of a data packet, can be used for this purpose, for example a data packet or portion of a data packet already provided in the particular communication protocol being utilised. Alternatively, a dedicated data packet may be provided for this purpose.

According to further embodiments, the receiver may also be adapted to communicate the quality of the received signal to the transmitter side of the differential digital communications link, such that the transmitter side can adjust one or more of the following parameters to change power consumption:
the signal strength of a transmitted signal;
the voltage of a transmitted signal, for example a differential mode voltage;
the slew rate of a transmitted signal.

As such, one embodiment of the invention comprises a transmitter apparatus comprising receiving means coupled to receive a signal quality indicator from a remote receiver apparatus. The signal quality indicator indicates the quality of a signal received at the remote receiver apparatus based on a result of a phase correlation operation performed at the remote receiver. For example, the signal quality indicator can be based on how many different clock phases used for signal correlation at the remote receiver resulted in correct reception of a signal received at the remote receiver. The transmitter in such an embodiment comprises a control unit for adjusting one or more parameters in the transmitter apparatus, including but not limited to one or more of the parameters noted above, based on the signal quality indicator, that effect the power consumption of the digital signalling link.

Referring to Figure 4, according to another embodiment the source impedance is adapted to be more inductive to enable a class D driver. For example, a buffer at the transmitter side may be provided with first and second sets of drivers 401, 403, with their outputs connected on either side of an inductor L_{S}. In a low power mode (for example when it is determined from the received signal quality that the power consumption can be reduced), the first buffer 401 is tri-stated and the second buffer 403 drives via the inductor L_{S} and source impedance R_{S2}, thus resembling a class-D stage to provide improved efficiency.

In a fast or high-quality mode both of the buffers 401, 403, or the second buffer 403 alone, may be used to drive the transmission link.

According to another embodiment, the output voltage source is decreased based on a detected output voltage at the transmission line interface. In other words, upon an indication from the quality of the received signal that one or more parameters can be adapted to save power, the output voltage source may be decreased based on a detected output voltage at the transmission line interface.

In such an embodiment the output voltage detected at the transmission line interface may be in addition to having already received an indication from the receiver that this parameter can be changed. Alternatively, a voltage amplitude detector may be provided in the receiver, which could serve as an additional received signal quality indicator. Alternatively, the system may know in advance the desired output voltage at the transmission line interface, and whereby there might be a request from the receiver to reduce or increase voltage to a certain level.

According to another embodiment, the signal amplitude (or differential mode voltage) is decreased. The receiver side can, after finding the received signal to be unnecessarily good, order the transmitter side to reduce the differential mode voltage. For example, for a nominal source voltage of 400mV with source and load impedance of 100Ohm each, the resulting current will be 2mA. However, if the source differential mode voltage is reduced to 200mV, the signal current is reduced to 1 mA, thus saving power. It will be appreciated that these values are examples only, and that other differential mode voltages may be used.

According to another embodiment, the quality of a frequency synthesizer output within the receiver circuitry may be reduced, thereby saving power. For example, the jitter requirement may be deceased to provide less power consumption.

According to yet another embodiment, the number of clock phases used for phase correlation may be reduced to save power. For example, according to one embodiment once an appropriate centre phase has been found, only a limited number of phases adjacent to the centre phase are used for eye opening estimation. Such an embodiment does not necessarily impact the quality of the signal.

According to another embodiment the power consumed in buffer circuits and phase alignment circuits in a transmitter and/or receiver can be reduced. For example, by changing the bias level of a buffer its bandwidth, for example, may be reduced leading to higher jitter in the received signal (and lower power consumption). This is valid both for transmitting and receiving buffers. In the case of a transmitter, the transmitted signal edges are slower, leading to higher sensitivity to superimposed interference or noise. On both the transmitter and receiver sides it is also possible to have more inter-symbol-interference when the buffer bandwidths are reduced.

One of the parameters in DigRF is the slew-rate of the transmitted signal. Thus, according to another embodiment, the slew rate is reduced in order to save power consumption, based on the quality of the received signal.

It is noted that the parameters mentioned above are merely examples of how the power consumption may be changed, and one or more of these parameters, or other parameters, may be used in accordance with embodiments of the invention, either alone or in any combination.

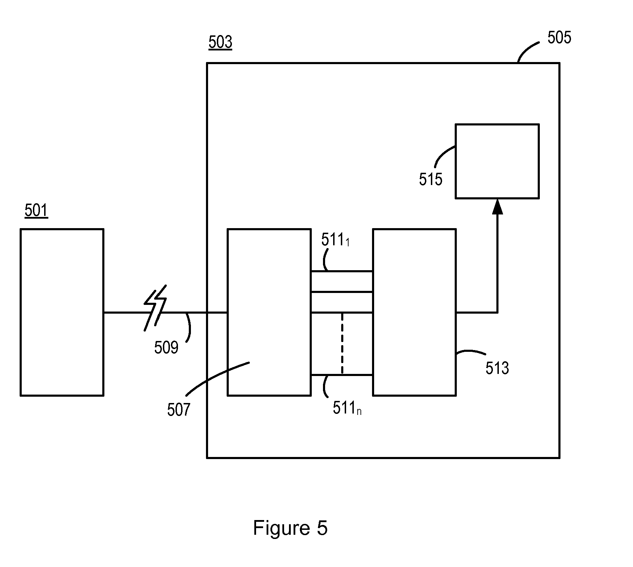

Figure 5 shows an example of an apparatus 505 for saving power in a differential digital signalling system according to an embodiment of the invention. In Figure 5 node 501 represents a "transmitter side", and node 503 represents a "receiver side". It will be appreciated that, in practice, each of the "transmitter side" and "receiver side" may include transceivers, such that a "transmitter side" operates as both a transmitter and receiver, and the "receiver side" as both a receiver and transmitter.

The apparatus 505 comprises a partitioning unit 507 that is coupled to receive a signal 509 from the differential digital signalling link. The partitioning unit 507 is adapted to partition the received signal 509 into a plurality of different sampling positions (using different clock phases) 511₁ to 511ₙ for phase correlation. As mentioned above, the partitioning unit 507 may already be provided for determining which of a plurality of clock phases is best suited to receive a burst of data. Alternatively, the partitioning unit 507 may be provided for the purposes of the invention. A monitoring unit 513 is adapted to determine the quality of the received signal based on the phase correlation process, for example by monitoring how many of the different clock phases provide, or lead to a correct reception. A control unit 515 is provided for adapting one or more parameters that affect power consumption in the differential digital signalling link, according to the determined quality of the received signal.

According to one embodiment, if the channel conditions are fairly constant, then it is possible to have special training sequence to set up signal quality parameters, and then set power saving options constant for a long duration. The DigRF standard allows user defined synchronisation patterns. In the DigRF standard, a SYNC pattern begins each frame to resolve clock phasing sufficiently to allow each frame to be successfully received without additional tracking. However it may not be necessary to update signal quality parameters after each new frame.

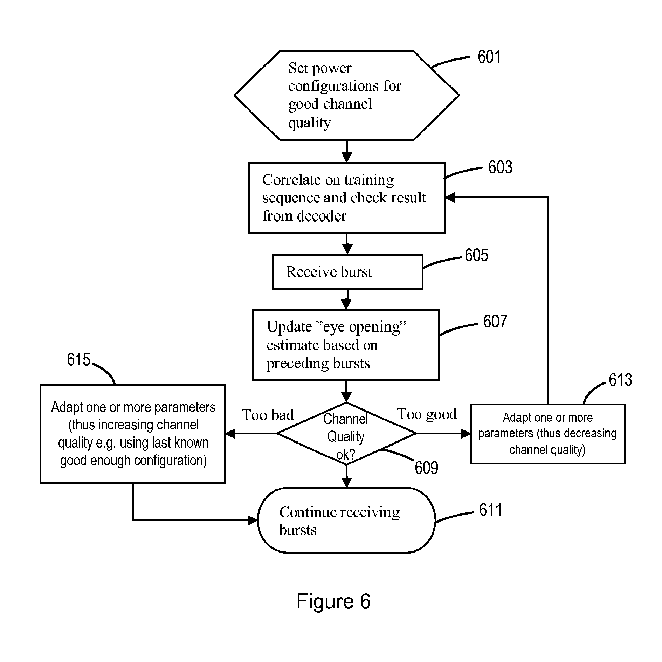

Figure 6 shows a flow chart illustrating a method according to an embodiment of the invention. In step 601 the power configurations are set for a good channel quality. For example, the power configurations may be set for an ideal transmission, with minimal losses or reflections, and without regard to power consumption.

In step 603 phase correlation is performed on a training sequence, and the result from a decoder checked. In step 605 a burst of data is received, and an "eye opening" estimate updated in step 607 based on preceding bursts. For example, one phase will be by definition correct. For each of the other phases a counter can be increased every time the data received at the corresponding phase differs from the centre phase. After a number of phases, for example 1000 phases, the counter values are examined, and the values, when plotted, form a "bathtub" shape. Therefore, this involves determining the quality of the received signal based on the phase correlation process, by determining how many or what range of phases have been received correctly.

If it is determined in step 609 that the channel quality is acceptable, then the apparatus continues receiving bursts of data, step 611, according to the set power parameters. Processing may then return to step 605.

If it is determined in step 609 that the channel quality is too good, for example better than a predetermined threshold, then one or more parameters that affect power consumption can be adapted, thereby decreasing channel quality, step 613. According to one embodiment processing may then return to step 603. For example, during initial operation, when the overall channel parameters are not well known, or no live data is available, it may be preferable to not use live data (i.e. because of the risk for excessive errors), in which case processing returns to step 603 in which correlation is based on a training sequence. However, according to one embodiment, once past this initial stage, when the parameter space is known, processing from step 613 may continue instead to step 611.

If it is determined in step 609 that the channel quality is too poor, for example worse than a predetermined threshold, then one or more parameters that affect power consumption can be adapted, thereby increasing channel quality, step 615. According to one example, the channel quality can be increased by using a previous configuration that has been known to provide adequate channel quality. The apparatus may then continue to receive burst of data, step 611, at the increased channel quality. Processing may in due course return to step 603, such that the channel quality can be monitored once more in order to adapt one or more parameters that affect power consumption.

If will be appreciated that, in the flow chart of Figure 6, adapting one or more parameters to "decrease channel quality" involves using any one or more of the methods mentioned above, or other methods, alone or in any combination. Increasing channel quality can involve using the reverse of one or more of the methods mentioned above, or other methods, alone or in any combination.

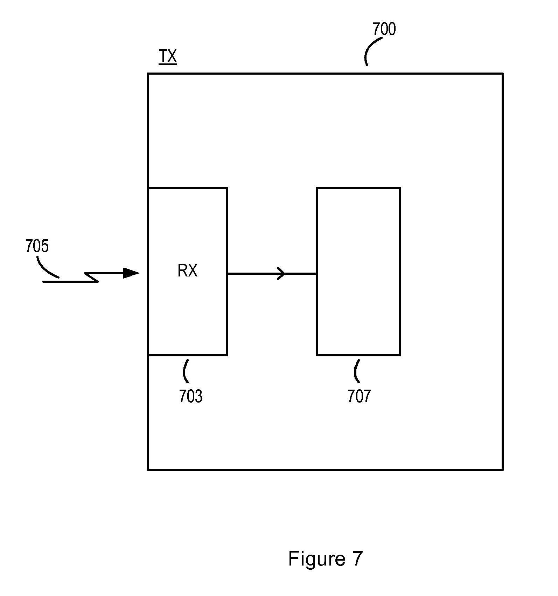

Figure 7 shows a transmitter according to an embodiment of the invention. In addition to having transmitting means (not shown), the transmitter 700 comprises receiving means 703 coupled to receive a signal quality indicator 705 from a remote receiver apparatus (not shown). The signal quality indicator 705 indicates the quality of a signal received at the remote receiver apparatus based on a result of a phase correlation operation performed at the remote receiver. For example, the signal quality indicator 705 can be based on how many different clock phases used for signal correlation at the remote receiver resulted in correct reception of a signal received at the remote receiver. The transmitter 700 in such an embodiment comprises a control unit 707 for adjusting one or more parameters in the transmitter apparatus 700 that effect the power consumption of the digital signalling link, including but not limited to one or more of the parameters noted above, either alone or in any combination, based on the signal quality indicator.

The embodiments of the invention described above have the advantage of monitoring or sensing the channel quality by observing a number or range of phases that lead to correct reception, and using this information to dynamically control power consumption.

Furthermore, if desired, error detection can be included in the channel quality sensing.

It is noted that the embodiments of the invention can be used with a system which generates any number of different clock phases in order to determine the best phase for the receiver clock. For a non-adaptive solution, the number of clock phases is preferably large enough to cope with at least worst possible signal conditions according to the standard, in which case the phase alignment may be unnecessarily accurate for typical or favourable conditions.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method of saving power in a digital signalling link, the method comprising the steps of:
partitioning a received signal into a plurality of different clock phases for phase correlation;
determining the quality of the received signal based on a result of the phase correlation; and
adapting one or more parameters that affect power consumption in the digital signalling link according to the determined quality of the received signal.

2. A method as claimed in claim 1, wherein the step of determining the quality of the received signal comprises monitoring how many of the different clock phases result in correct reception.

3. A method as claimed in claim 1 or 2, wherein the adapting step comprises the step of adjusting a load impedance in relation to the impedance of the digital signalling link.

4. A method as claimed in any one of claims 1 to 3, further comprising the step of communicating the quality of the received signal to a transmitter side of the digital signalling link, such that the transmitter side can adjust one or more parameters that affect power consumption.

5. A method as claimed in any one of the preceding claims, further comprising the step of receiving a communication from a remote receiver relating to the quality of a received signal at the remote receiver, and using this communication to adjust one or more parameters that affect power consumption.

6. A method as claimed in claim 4 or 5, wherein the one or more parameters relate to one or more of the following parameters relating to a transmitter in the digital communications link;
the signal strength of a transmitted signal;
the voltage of a transmitted signal;
the slew rate of a transmitted signal.

7. A method as claimed in any one of the preceding claims, wherein the adapting step further comprises the step of reducing the quality of a frequency synthesizer output.

8. A method as claimed in any one of the preceding claims, wherein the adapting step comprises the step of reducing the number of different clock phases used in the phase correlation.

9. A method as claimed in any one of the preceding claims, wherein the step of determining the quality of the received signal further comprises the step of using error correction to determine the signal quality.

10. A method as claimed in any one of the preceding claims, wherein the one or more parameters are adapted to either increase or decrease the power consumption according to the channel quality.

11. An apparatus for saving power in a digital signalling link, the apparatus comprising:
a partitioning unit coupled to receive a signal from the digital signalling link, and adapted to partition the received signal into a plurality of different clock phases for phase correlation;
a monitoring unit adapted to determine the quality of the received signal based on a result of the phase correlation; and
a control unit for adapting one or more parameters that affect power consumption in the digital signalling link, according to the determined quality of the received signal.

12. An apparatus as claimed in claim 11, wherein the monitoring unit is adapted to determine the quality of the received signal by monitoring how many of the different clock phases result in correct reception.

13. An apparatus as claimed in claim 11 or 12, wherein the control unit is adapted to adjust a load impedance in relation to the impedance of the link.

14. An apparatus as claimed in any one of claims 11 to 13, wherein the control unit is further adapted to communicate the quality of the received signal to a remote transmitter in the digital signalling link, such that the transmitter can adjust one or more parameters that affect power consumption.

15. An apparatus as claimed in any one of claims 11 to 14, further comprising a transmitter, and whereby the apparatus is adapted to receive a signal quality indicator from a remote receiver in the digital signalling link, the signal quality indicator relating to the quality of a received signal at the remote receiver, and whereby the control unit is adapted to adjust one or more parameters that affect power consumption in the transmitter.

16. A transmitter apparatus for use in a digital signalling link, the transmitter apparatus comprising:
receiving means coupled to receive a signal quality indicator from a remote receiver apparatus, wherein the signal quality indicator indicates the quality of a signal received at the remote receiver apparatus based on a result of a phase correlation operation performed at the remote receiver apparatus; and
a control unit for adjusting one or more parameters in the transmitter apparatus, based on the signal quality indicator, that effect the power consumption of the digital signalling link.

17. A transmitter as claimed in claim 16, wherein the signal quality indicator is based on how many different clock phases used for signal correlation at the remote receiver resulted in correct reception of a signal received at the remote receiver.

18. A transmitter as claimed in claim 16 or 17, wherein the one or more parameters relate to one or more of;
the signal strength of a transmitted signal;
the voltage of a transmitted signal;
the slew rate of a transmitted signal.
